(19) Europäisches Patentamt
European Patent Office
Office européen des brevets

(11) **EP 0 886 444 A2**

(12) **EUROPEAN PATENT APPLICATION**

(43) Date of publication:
23.12.1998 Bulletin 1998/52

(51) Int. Cl.$^6$: **H04N 7/30**

(21) Application number: 98110048.0

(22) Date of filing: 02.06.1998

(84) Designated Contracting States:
AT BE CH CY DE DK ES FI FR GB GR IE IT LI LU MC NL PT SE
Designated Extension States:
AL LT LV MK RO SI

(30) Priority: 18.06.1997 GB 9712645

(71) Applicant: NDS LIMITED
West Drayton, Middlesex UB7 ODQ (GB)

(72) Inventor:
Bock, Alois Martin, Dr.
Eastleigh, Hampshire, SO50 4PF (GB)

(74) Representative:
Anderson, Angela Mary
NDS Limited,
Stoneham Rectory
Stoneham Lane
Eastleigh, Hampshire SO50 9NW (GB)

(54) **Filtering method to reduce block artifacts in digital video sequences**

(57)    The present invention relates generally to the domain of digital signal processing and, more precisely, the methods and apparatus employed in the reduction of visibility of blockiness in images or video sequences encoded using block-based coding techniques such as MPEG.

   The present invention detects a level of blockiness between blocks in an image and applies a variable filter across the block boundaries. The filter parameters are chosen depending on the level of blockiness detected. If no blockiness is detected then no filtering is performed on the image.

   An important aspect of the present invention reduces the false detection of naturally occurring blockiness in images by analysing the image both spatially and temporally.

Fig.1.

**Description**

The present invention relates to the processing of an input signal and more precisely the methods and apparatus used for filtering an input signal representing a digital block-based coded image.

Digital video compression systems are designed to remove irrelevant and less important information from image sequences in such a way that the best image rendition is achieved for a given data rate. The data rate required to give a faithful reproduction of the original image sequences depends greatly on the type of picture material in question. In systems which are designed to compress the image sequence to a constant bit-rate, in particular, it is not possible to completely avoid the appearance of compression defects on the decompressed images. Even in systems in which the bit-rate is allowed to vary according to the criticality of video signal it is inevitable that the decompressed images suffer, occasionally, from compression artefacts. The reason for this being that video compression algorithms, which are designed to work well for the majority of input material, will, in extreme cases, produce an output data rate which actually exceeds the data rate of the original image sequence. Image compression systems are, therefore, designed to give the best picture quality for high percentages of time, accepting that, occasionally, the system might be overloaded and compression artefacts might appear on the output of the system.

The most common and visually annoying artefact in today's video compression systems is blockiness. Block-based image compression systems, such as the commonly used motion-compensated hybrid discrete cosine transform (DCT) algorithms, suffer from blockiness as a result of dividing the image into a number of blocks each of which is coded and predicted separately. Coding takes place after DCT transformation which provides a method for distinguishing between spatial frequency components of greater or lesser importance. Blockiness is an effect in which the boundaries between these coding blocks become visible due to the fact that not enough or too coarsely quantised DCT coefficients are being transmitted to give faithful reproduction of the original image. Since the quantisation and the loss of higher-order DCT coefficients is a consequence of statistical loading of the coder, it is possible, to some extent, to reduce the amount of block distribution by applying more sophisticated coding techniques and/or by providing more transmission bandwidth, but it is not possible, in principle, to avoid blockiness altogether.

Accordingly, the object of the present invention is to reduce the visibility of block distortion in a block-based coded image.

According to a first aspect of the present invention there is provided a method of filtering an input signal representing a digital block-based coded image to produce an output signal, the method comprising the steps of: detecting the level of block distortion in the image; and filtering the input signal in dependence on the level of block distortion.

According to a second aspect of the present invention there is provided apparatus for filtering an input signal representing a digital block-based coded image to produce an output filtered signal, the apparatus comprising; a detector for detecting a level of block distortion; and a filter for filtering the input signal in dependence on the level of block distortion.

The present invention may be applied with advantage to help reduce the visibility of block distortion by applying adaptively varying spatial filters to the output images of compression decoders. This makes it possible to operate compression systems more efficiently because they no longer have to be designed to cope with statistical worst case events, thus wasting valuable bandwidth resource during most of their normal operational time. Instead, systems can be designed in which occasional overload is acceptable because the effects are no longer as dramatic as they would be without the invention.

The invention will now be described, by way of example, with reference to the accompanying drawings, in which:

Figure 1 is a block diagram showing a first embodiment of the present invention;
Figure 2 is a block diagram showing a second embodiment of the present invention;
Figure 3 shows an example of a signal containing severe block distortion and the result after the signal has passed through the filtering process of the present invention; and
Figure 4 is a table which shows a set of possible filter coefficients

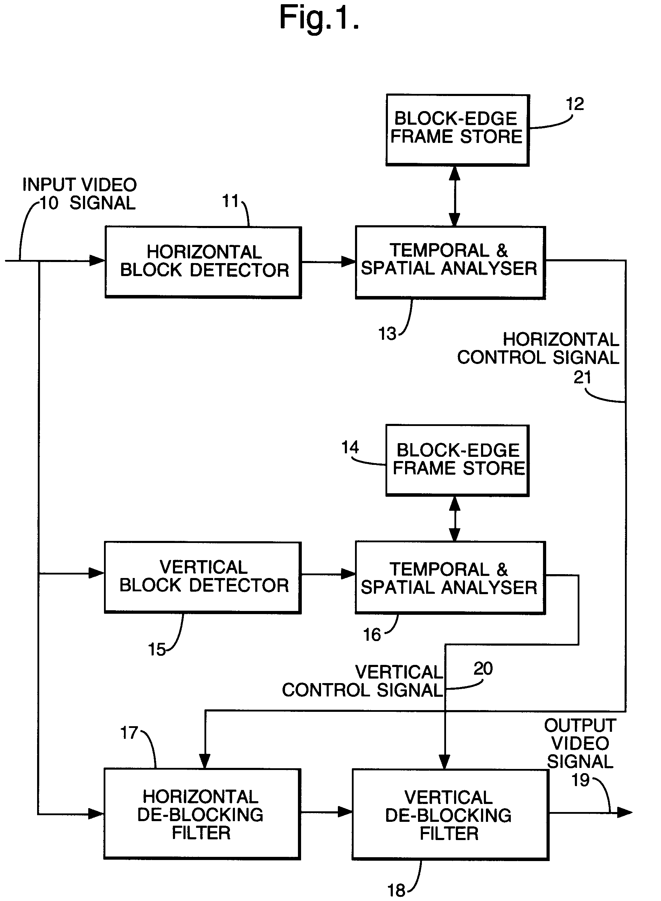

Figure 1 is a block diagram showing a first embodiment of the present invention. Input signal 10 is a signal that represents a digital block-based coded image. The input signal 10 is processed by the horizontal block detector 11, temporal & spatial analyser 13, block-edge frame store 12, vertical block detector 15, temporal & spatial analyser 16, block-edge frame store 14, horizontal de-blocking filter 17, and vertical de-blocking filter 18 to reduce the visibility of block distortion within the image. The resultant output video signal 19 is then fed to display, storage or other means.

The input signal 10 is first analysed both horizontally and vertically for block distortion. The information gained in the analysis is then used to adaptively control a number of smoothing filters to reduce visibility of block distortion.

The analysis of block distortion makes use of the fact that the block size and location in image compression systems is both known and fixed. Therefore, it is possible to compare spatial differences within each block with those across block boundaries.

The horizontal analysis is carried out by way of the horizontal block detector 11, the temporal & spatial analyser 13 and the block-edge frame store 12.

The vertical analysis is carried out by way of the vertical block detector 15, the temporal & spatial analyser 16 and the block-edge frame store 14.

The Blockiness $B_{i,j}$ between blocks $b_{i,j}$ and $b_{i-1,j}$ is defined as follows:

$$B_{i,j} = \frac{A}{B} = \frac{\sum_{y=0}^{N-1} \left| S_{iN,jN+y} - S_{iN-1,jN+y} \right|}{\sum_{\substack{x=-3 \\ x \neq 0}}^{3} \sum_{y=0}^{N-1} \left| S_{iN+x,jN+y} - S_{iN+x-1,jN+y} \right|} \qquad \textbf{Equation 1}$$

where $S_{x,y}$ denote the samples of the image and N is the block size

Equation 1 provides a way of analysing the image to determine the presence of block distortion. It achieves this by firstly analysing the image across the block boundary. It then analyses the content of each block on either side of the boundary which enables it to detect any discontinuities between the blocks which could amount to block distortion. A level of block distortion can then be calculated which represents the a measure of discontinuity between the blocks.

When analysing the spatial detail of the image a compromise needs to be reached regarding the portion of each image block that is analysed. If only one pixel either side of the boundary is analysed then insufficient information would be available to accurately detect the level of block distortion. On the other hand, if too many pixels either side of the boundary are analysed then the level of block distortion detected could be inaccurate. Since block distortion only exists between blocks, analysing image data in the centre of a block could lead to unnecessary filtering of the block.

In this embodiment, as shown in Equation 1, the spatial detail is analysed three pixels (or three samples) either side of the boundary formed by adjacent blocks. This represents a compromise between evaluating spatial masking across the block boundary and allowing for decorrelation of samples which are further away. If the spatial difference across block boundaries is significantly greater than that within each of the two adjacent blocks, it is probably due to block distortion. Furthermore, if the spatial differences are all similar in magnitude it is likely that any possible block distortion would be masked by the spatial detail.

In some instances it may be desirable to increase or decrease the number of pixels analysed between adjacent blocks, for example if the size of the blocks was to increase.

The numerator A in Equation 1 is the sum of the absolute differences across the block boundary, whereas the denominator B is the sum of the absolute differences of adjacent samples within the two blocks but near the block edge.

Note that the division A/B in Equation 1 can be replaced by an approximation to the difference log(A) - log(B) for the purpose of implementing the algorithm in hardware and that the denominator B has to be checked to be non-zero before the division can be performed. For the particular case where $B_{i,j} = 0$ and A > 0 maximum blockiness ($B_{i,j} = 10$) is assumed.

Both the horizontal and the vertical block detectors 11 and 15 perform the detection by way of an implementation of Equation 1, although it would be appreciated by someone skilled in the art that other detection methods could also be used. The operation for the vertical analysis is functionally identical to that of the horizontal analysis apart from the fact that the analysis is performed in the vertical direction.

The input data signal 10 is analysed for horizontal blockiness by the horizontal block detector 11. Occasionally it will happen that real image objects coincide exactly with block boundaries. In order to reduce the likelihood of false detection of block distortion in those cases, the result of the analysis in the previous frame not only of the block in question but, to allow for motion, also of neighbouring blocks are taken into account. If blockiness is detected the data signal is passed on to the temporal and spatial analyser 13. In conjunction with the block-edge frame store 12, the temporal and spatial analyser 13 is used to reduce the false detection of blockiness by taking into account temporal and spatial differences between images. The block-edge frame store 12 is used to store block edges so that block edges of different image frames can analysed to provide temporal analysis. This allows motion to be considered in deciding whether blockiness actually exists or is naturally occurring within an image.

For the temporal analysis, blockiness of the current block boundary $B_{i,j,t}$ is, therefore, calculated as follows:

$$B_{i,j,t} = \left[ MIN\left( B_{i\pm1,j\pm1,t-1} \right) + B_{i,j,t} \right] / 2 \qquad \textbf{Equation 2}$$

where MIN(A) defines the smallest number in A

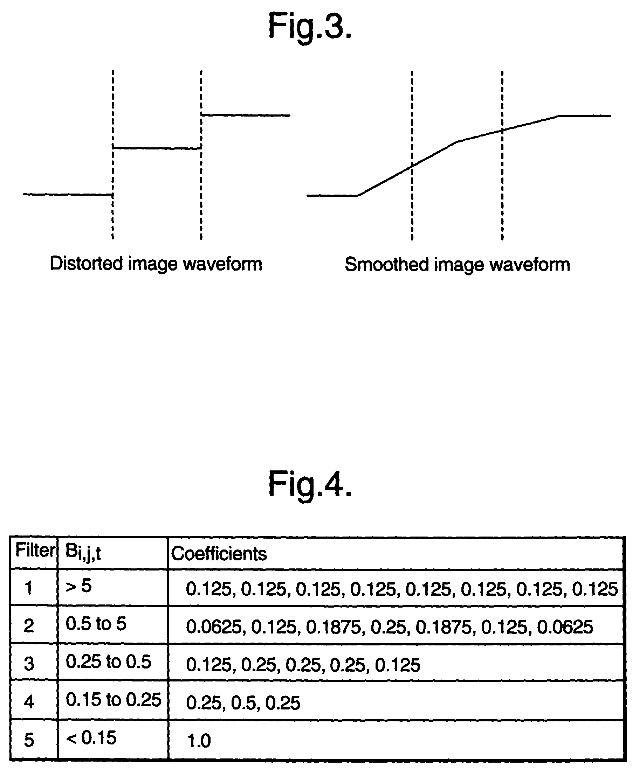

The output from the temporal and spatial analyser 13 is a horizontal control signal 21 which represents the detected level of blockiness. It is then fed into the horizontal de-blocking filter 17 which, depending on the value the horizontal control signal 20 determined by the horizontal analysis, applies a variable degree of filtering to reduce the visibility of the distortion to the signal. Figure 4 shows a set of possible filter coefficients that could be used. Vertical de-blocking filter 18 is used to apply the filtering in the vertical direction when vertical blockiness is detected.

The level of smoothing applied to the signal varies according to the amount of blockiness detected - for example, where severe blockiness is detected across block boundaries a harsh filter, for example Filter 1 from Figure 4, will be applied, whereas if little distortion is detected across block boundaries a much finer filter will be applied, for example Filter 4 from Figure 4. When there is essentially no blockiness no filtering is required and Filter 5 from Figure 4 is designed not to filter the image.

Since the filtering operation in particular is strictly one-dimensional, the two components remain orthogonal so that the order of processing can be freely chosen.

It is important to note that the filtering is applied only across those block boundaries where the distortion has been measured, not over any other part of the image.

The actual level of filtering applied to the image is dependant on the level of blockiness detected. This allows the invention to cope with a wide degree of blockiness, from extreme blockiness down to no blockiness at all. Figure 4 shows a set of possible filter coefficients that could be used depending on the detected level of blockiness.

Filter 1 (see Figure 4), in particular, has been designed to convert a signal with extreme block distortion ($B_{i,j}$ =10) into a piece-wise linear waveform as shown in Figure 3. The other filters are applied in cases of less severe distortion thus reducing the visibility of switching artefacts. Filter 5 has no filtering effect and is used when no block distortion has been detected.

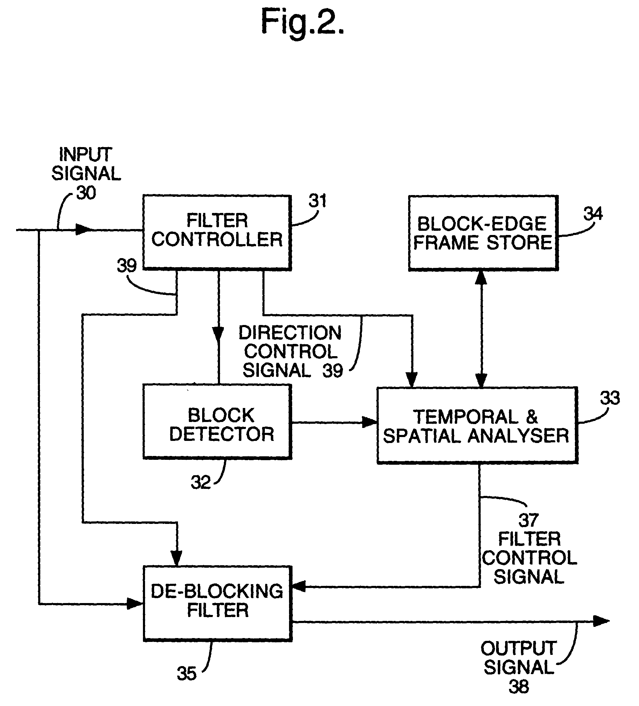

Figure 2 shows a second embodiment of the present invention. Input signal 30, representing a digital block-based coded image is fed in parallel to a filter controller 31 and a de-blocking filter 35. The filter controller controls the direction of the filtering and the analysis operation by way of direction control signal 39.

To detect and correct for horizontal block distortion filter controller 31 informs block detector 32, temporal & spatial analyser 33 and de-blocking filter 35 to operate in the horizontal direction. The direction of operation is communicated to the other modules by way of direction control signal 39. To detect and correct for vertical blockiness filter controller 31 informs block detector 32, temporal & spatial analyser 33 and de-blocking filter 35 to operate in the vertical direction.

Input signal 30 is input to filter controller 31. The filter controller decides whether to process the input signal in either the horizontal or vertical direction. For the purposes of this example the horizontal direction will be described, although the operation is essentially the same processing in the vertical direction.

For analysis in the horizontal direction, filter controller 31 informs, by way of direction control signal 39, block detector 32, temporal & spatial analyser 33 and de-blocking filter 35 to operate in the horizontal direction.

Block detector 32 analyses the image for horizontal block distortion. This is carried out in the same way as described for the first embodiment of the present invention above, by way of implementing Equation 1, although other implementations could be used. The signal is then passed to the temporal and spatial analyser 33 which analyses the signal to reduce the likelihood of detecting naturally occurring blockiness in an image. This is achieved by comparing values with previous frames so that any motion can be taken into account. For example, it is possible for a naturally occurring edge to be aligned with one of the block boundaries used by the block-coding method used to encode the image. By accounting for motion, the false detection of naturally occurring blockiness can be significantly reduced. Block edge frame store 34 is used to store previous image frames to enable the temporal analysis to take place and provides a series of previous values to enable this to happen.

Once horizontal analysis and temporal analysis has taken place, a measure of block distortion can be derived.

A filter control signal 37, representing the detected level of block distortion, is then fed to de-blocking filter 35. Depending on the detected level of block distortion, de-blocking filter 35 applies a filter to the input signal according to the filter coefficients shown in Figure 4. If severe blockiness is detected Filter 1 may be used. If, however, no blockiness is detected then Filter 5, which has no filtering effect, is used.

The filtered output signal 38 can then be fed to storage, display or other means.

By repeating the block detection, temporal & spatial analysis and de-blocking in both the horizontal and vertical direction the overall result is that the input signal is processed as per the first embodiment of the present invention. The advantage of this embodiment, however, is the reduction in the number of modules required to achieve the present invention which results in a subsequent reduction in the cost of realising the present invention.

## Claims

1.  A method of filtering an input signal representing a digital block-based coded image to produce an output signal, the method comprising the steps of:

detecting the level of block distortion in the image; and
filtering the input signal in dependence on the level of block distortion.

2. The method of claim 1, further comprising detecting the level of block distortion by comparing areas on either side of boundaries formed between blocks.

3. The method of claims 1 or 2, further comprising filtering across the boundaries so as to reduce the visibility of block-based distortion.

4. The method of claims 1, 2, or 3, further comprising processing the level of block distortion by comparing it to neighbouring values both spatially and temporally so as to reduce the false detection of naturally occurring blockiness.

5. The method of claims 1, 2, 3 or 4, further comprising analysing the image to determine whether the level of block distortion will be masked by spatial detail so as to arrive at a more accurate level of block distortion.

6. The method of claims 1, 2, 3, 4 or 5, further comprising filtering the input signal in both the horizontal and vertical direction.

7. Apparatus for filtering an input signal representing a digital block-based coded image to produce an output filtered signal, the apparatus comprising;

a detector for detecting a level of block distortion; and
a filter for filtering the input signal in dependence on the level of block distortion.

8. The apparatus of claim 7, wherein the detector detects a level of block distortion by comparing areas on either side of block boundaries formed between blocks.

9. The apparatus of claims 7 or 8, wherein the filter is applied across the boundaries, so as to reduce the visibility of block-based distortion.

10. The apparatus of claims 7, 8 or 9, further comprising a processor for processing the level of block distortion by comparing it to neighbouring values both spatially and temporally so as to reduce the false detection of naturally occurring blockiness.

11. The apparatus of claims 7, 8, 9 or 10, wherein the detector is adapted to determine whether the level of block distortion will be masked by spatial detail so as to detect the level of distortion more accurately.

12. The apparatus of claims 7, 8, 9, 10 or 11, wherein the filter is adapted to filter smooth across the boundaries in both the horizontal and vertical direction.

13. The apparatus of claim 10, wherein the processor further comprises storing means for storing previous values of blockiness for use in the temporal analysis.

# Fig.1.

# Fig.2.

INPUT
SIGNAL
30

FILTER
CONTROLLER — 31

39

BLOCK-EDGE
FRAME STORE — 34

DIRECTION
CONTROL
SIGNAL 39

BLOCK
DETECTOR

32

TEMPORAL &
SPATIAL ANALYSER — 33

37
FILTER
CONTROL
SIGNAL

DE-BLOCKING
FILTER

35

OUTPUT
SIGNAL
38

# Fig.3.

Distorted image waveform          Smoothed image waveform

# Fig.4.

| Filter | $B_{i,j,t}$ | Coefficients |
|--------|-------------|--------------|
| 1 | > 5 | 0.125, 0.125, 0.125, 0.125, 0.125, 0.125, 0.125, 0.125 |
| 2 | 0.5 to 5 | 0.0625, 0.125, 0.1875, 0.25, 0.1875, 0.125, 0.0625 |
| 3 | 0.25 to 0.5 | 0.125, 0.25, 0.25, 0.25, 0.125 |
| 4 | 0.15 to 0.25 | 0.25, 0.5, 0.25 |
| 5 | < 0.15 | 1.0 |